# NEUE EUROPÄISCHE PATENTSCHRIFT

(11) **EP 1 922 524 B2**
(45) Veröffentlichungstag und Bekanntmachung des Hinweises auf die Entscheidung über den Einspruch: **07.11.2018**
(45) Hinweis auf die Patenterteilung: 24.12.2008
(21) Anmeldenummer: 06778340.7
(22) Anmeldetag: 24.08.2006
(51) Int. Cl.: G01C 19/56, G01P 9/04

(54) **VERFAHREN UND VORRICHTUNG ZUM ERMITTELN EINER DREHRATE**
METHOD AND DEVICE FOR DETERMINING A RATE OF ROTATION
PROCEDE ET DISPOSITIF POUR DETERMINER UNE VITESSE DE ROTATION

(30) Priorität: 09.09.2005 DE 102005043025
(43) Veröffentlichungstag der Anmeldung: 21.05.2008
(73) Patentinhaber: Continental Automotive GmbH, 30165 Hannover (DE)
(72) Erfinder: MAYER-WEGELIN, Raphael, 61381 Friedrichsdorf (DE); MORELL, Heinz-Werner, 67659 Kaiserslautern (DE)
(86) Internationale Anmeldenummer: PCT/EP2006/065618
(87) Internationale Veröffentlichungsnummer: WO 2007/028720

(56) Entgegenhaltungen:
- WO-A-2004/046649
- WO-A-2005/001381
- JP-A- 2001 116 553
- US-A- 6 089 089
- US-B2- 6 915 215
- PEARCE CH.: 'The performance and future development of a MEMS SIVSG and its application to the SiIMU' SYMPOSIUM GYRO TECHNOLOGY 2001, Seiten 6.1 - 6.10
- SHCHEGLOV K. ET AL: 'Temperature dependent characteristics of the JPL silicon MEMS gyroscope' CALIFORNIA INSTITUTE OF TECHNOLOGY 18 März 2000,
- GRIPTON A. ET AL: 'The application and future development of a MEMS SiVSG for commercial and military inertial products' BAE SYSTEMS 2002,
- Evidence of SiMU02 sale
- National Physical Laboratory, "What is the difference between calibration and adjustment" 07.09.2009
- Schematic of SiMIMU02
- Comparison between D2 and opposed patent
- WO2003/078302
- US 7,240,533
- US 5,419,194

## Beschreibung

Die Erfindung betrifft ein Verfahren und eine entsprechende Vorrichtung zum Ermitteln einer Drehrate. Die Drehrate wird mittels eines Drehratensensors ermittelt. Der Drehratensensor umfasst einen schwingungsfähigen Körper. Der schwingungsfähige Körper wird zu einer Primärschwingung angeregt. Ein Drehen des Drehratensensors ruft eine Sekundärschwingung des schwingungsfähigen Körpers hervor, die die Primärschwingung überlagert. Abhängig von der Sekundärschwingung kann die Drehrate, mit der der Drehratensensor gedreht wird, ermittelt werden.

Druckschrift WO 2004/046649 A2 offenbart einen Drehratensensor, mit einem ersten und einem zweiten Oszillator, wobei abhängig von der ermittelten Eigenfrequenz mindestens ein Drehratenkalibrierwert angepasst wird, der sich auf die ermittelte Drehrate auswirkt. Der Drehratensensor weist ein Sensorelement auf, das mit seiner Eigenfrequenz zu einer Schwingung angeregt wird. Die Amplitude der Schwingung wird mit einer Steuerung konstant gehalten.

Aus der DE 198 32 906 C1 ist ein kapazitiver Drehratensensor bekannt. Der Drehratensensor besteht aus einer federnd gelagerten spiegelsymmetrisch ausgebildeten seismischen Masse. An der Masse sind kammartig Elektroden und mindestens zwei Gruppen von spiegelsymmetrisch angeordneten kammartigen Gegenelektroden befestigt. Die Gegenelektroden sind jeweils an einem Träger befestigt und greifen zwischen die an der seismischen Masse befestigten Elektroden ein. Der Träger der Gegenelektroden ist allein im Bereich der der Symmetrieachse am nächsten liegenden Punkte auf einem Keramikträger befestigt.

Aus der WO 95/16921 ist ein Drehratensensor bekannt, bei dem zur Temperaturkompensation einen Temperatursensor in dem Drehratensensor oder in der Nähe des Drehratensensors angeordnet ist.

Aus der DE 691 13 597 T2 ist ein Verfahren zur Bestimmung des Skalierungsfaktors eines piezoelektrischen Drehratensensors zum Zwecke der Skalierungsfaktorkompensation mit den folgenden Schritten bekannt. Es wird eine Vibrationseinrichtung derart aktiviert, dass die Vibration eines vibrationsfähigen Aufbaus an einem primären Treiberpunkt hiervon angeregt wird. Es wird die Vibrationsgröße am primären Abnahmepunkt des Aufbaus überwacht. Es wird die Größe der Vibration am Primärabnahmepunkt mit einem Bezugswert verglichen und es wird die Größe der Vibration am primären Treiberpunkt verändert, um die Größe der Vibration an dem Primärabnahmepunkt im Wesentlichen konstant zu halten. Ferner wird eine natürliche Resonanzfrequenz des vibrationsfähigen Aufbaus gemessen. Es wird eine Treiberstromamplitude und eine Treiberspannungsamplitude nach der Vibrationseinrichtung bei Resonanz überwacht. Es wird ein Leistungseingang nach dem vibrationsfähigen Aufbau bei Resonanz aus der überwachten Treiberstromamplitude und der Treiberspannungsamplitude bei der natürlichen Resonanzfrequenz bestimmt. Es wird der Gütefaktor des Vibrationsaufbaus unter Benützung des Leistungseingangs bei Resonanz bestimmt. Es wird der piezoelektrische Ladungskoeffizient des Vibrationsaufbaus bestimmt. Es wird unter Benutzung des Gütefaktors und des piezoelektrischen Ladungskoeffizienten der Skalierungsfaktor bestimmt. Es wird die Größe einer sekundären Vibrationsmode gemessen und es wird der Skalierungsfaktor und die Größe der sekundären Vibrationsmode benutzt um die Drehrate des Sensors zu bestimmen.

Aus der WO 2005/001381 A1 ist ein Drehratensensor mit einem Vibrationskreisel bekannt. Der Vibrationskreisel ist Teil eines primären und eines sekundären Regelkreises. Die Regelkreise verstärken jeweils ein Ausgangssignal des Vibrationskreisels. Ferner demodulieren und remodulieren die Regelkreise das Ausgangssignal des Vibrationskreisels. Ferner führen die Regelkreise die Ausgangssignale dem Vibrationskreisel wieder als Regelsignal zu. Der primäre Regelkreis bringt den überwiegenden Teil der Energie zur Aufrechterhalten der Vibration auf. Zur Erzeugung von Trägern ist ein Frequenzsynthesizer mit Mitteln zur Einstellung der Phasenlage der Träger untereinander vorgesehen. Die Träger dienen zur Demodulation und zur Remodulation. Der Frequenzsynthesizer bildet zusammen mit einer Phasenvergleichsschaltung einen Phasenregelkreis. Der Phasenvergleichsschaltung sind das verstärkte Ausgangssignal im primären Regelkreis und ein vom Frequenzsynthesizer erzeugter Vergleichsträger zuführbar.

Die Aufgabe der Erfindung ist es, ein Verfahren und eine Vorrichtung zum Ermitteln einer Drehrate zu schaffen, das beziehungsweise die einfach ein präzises Ermitteln der Drehrate ermöglicht.

Die Aufgabe wird gelöst durch die Merkmale der unabhängigen Ansprüche. Eine vorteilhafte Ausgestaltung der Erfindung ist im abhängigen Anspruch gekennzeichnet.

Die Erfindung zeichnet sich aus durch ein Verfahren zum Ermitteln einer Drehrate. Ferner zeichnet sich die Erfindung aus durch eine Vorrichtung zum Durchführen des Verfahrens zum Ermitteln der Drehrate. Ein Sensorelement, dessen Eigenfrequenz linear von seiner Temperatur abhängt, wird abhängig von einem primären Stellsignal zu einer Primärschwingung entlang einer ersten Achse angeregt. Es wird ein primäres Messsignal erfasst, das repräsentativ ist für die Primärschwingung. Ferner wird ein sekundäres Messsignal erfasst, das repräsentativ ist für eine Sekundärschwingung des Sensorelements entlang einer zweiten Achse, die mit der ersten Achse einen Winkel ungleich Null einschließt. Die Eigenfrequenz des Sensorelements wird ermittelt. Lediglich abhängig von der ermittelten Eigenfrequenz wird mindestens ein Drehraten-Korrekturwert angepasst, der sich auf die ermittelte Drehrate auswirkt. Dieser Korrekturwert wirkt sich nicht auf eine Stellgröße aus. Er kann dazu verwendet werden, lediglich eine bekannte systembedingte Abweichung der ermittelten Drehrate von der tatsächlichen Drehrate zu korrigieren. Dies trägt einfach zu einem präzisen Ermitteln der Drehrate bei.

Mit einer Änderung der Temperatur des Drehratensensors kann sich das Schwingungsverhalten des schwingungsfähigen Körpers ändern. Die Änderung der Temperatur kann sich auch auf das Ermitteln der Drehrate auswirken.

In diesem Zusammenhang ist es vorteilhaft, wenn der Drehraten-Korrekturwert, der sich auf die Drehrate auswirkt, ermittelt wird mittels einer mathematischen Entwicklung des Drehraten-Korrekturwertes um eine Referenzfrequenz des Sensorelements, die repräsentativ ist für die Eigenfrequenz des Sensorelements bei der Referenztemperatur. Die Referenzfrequenz des Sensorelements ist repräsentativ für die Eigenfrequenz des Sensorelements bei einer Referenztemperatur. Die mathematische Entwicklung kann beispielsweise eine Taylorentwicklung sein. Es kann aber auch eine andere geeignete mathematische Entwicklung angewendet werden. Eine derartige mathematische Entwicklung kann einfach dazu beitragen, die Auswirkung der Änderung der Temperatur einfach zu kompensieren. Dies trägt besonders einfach zu einem Kompensieren der Auswirkung der Änderung der Temperatur des Drehratensensors bei.

Abhängig von der Eigenfrequenz kann die Temperatur des Sensorelements ermittelt. Dies ermöglicht die Temperatur des Sensorelements zu bestimmen. Das Sensorelement kann dann zur Temperaturbestimmung in einem Drehratensensor und/oder der Steuervorrichtung verwendet werden. Ferner kann der Drehratensensor dann als Temperatursensor verwendet werden.

Die Vorrichtung kann eine Steuervorrichtung, die in einem vorgegebenen Abstand zu dem Sensorelement angeordnet ist, umfassen. Die Steuervorrichtung ist ausgebildet zum Ermitteln ihrer eigenen Temperatur abhängig von der Temperatur des Sensorelements und zum Ermitteln der Drehrate abhängig von ihrer eigenen Temperatur. Falls das Sensorelement nahe genug an der Steuervorrichtung angeordnet ist, so kann mit dem Sensorelement die Temperatur der Steuervorrichtung ermittelt werden. Die internen Vorgänge in der Steuervorrichtung können dann abhängig von der Temperatur angepasst werden. Dies ermöglicht ein äußerst präzises Ermitteln der Drehrate.

Ausführungsbeispiele der Erfindung sind im Folgenden anhand der schematischen Zeichnungen näher erläutert.

Es zeigen:
- Figur 1: ein Blockschaltbild einer Vorrichtung zum Ermitteln einer Drehrate und eine schematische Darstellung eines Drehratensensors,
- Figur 2: ein Prinzipskizze einer Primärschwingung eines Sensorelements,

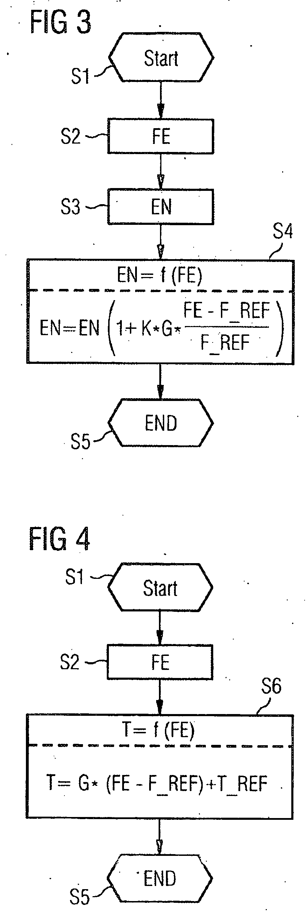

- Figur 3: ein Ablaufdiagramm eines Programms zum Anpassen eines Wertes,
- Figur 4: ein Ablaufdiagramm eines Programms zum Ermitteln einer Temperatur.

Elemente gleicher Konstruktion oder Funktion sind figurenübergreifend mit den gleichen Bezugszeichen gekennzeichnet.

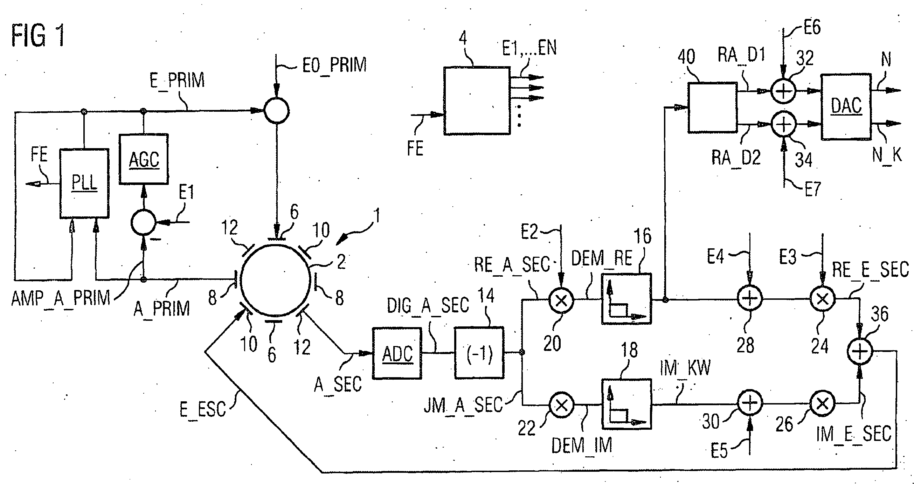

Ein Drehratensensor 1 (Figur 1) umfasst ein Sensorelement 2. Das Sensorelement 2 ist bevorzugt aus einem Ring gebildet. Eine Eigenfrequenz FE des Sensorelements 2 hängt linear von einer Temperatur T des Sensorelements 2 ab. Ferner umfasst der Drehratensensor 1 mindestens eine, vorzugsweise zwei primäre Erregerelektroden 6, primäre Detektorelektroden 8, sekundäre Erregerelektroden 10 und sekundäre Detektorelektroden 12. Falls der Drehratensensor 1 mit einer Drehrate N gedreht wird, so ist der Drehratensensor 1 geeignet zum Ermitteln der Drehrate N.

Ein primärer Regelkreis umfasst vorzugsweise die primären Erregerelektroden 6, die primären Detektorelektroden 8, eine automatische Amplitudenkontrolle AGC und einen Phased Looked Loop PLL. Ein sekundärer Regelkreis umfasst vorzugsweise die sekundären Erregerelektroden 10, die sekundären Detektorelektroden 12, einen Analog-Digital-Wandler ADC, einen Inverter 14, einen ersten und einen zweiten Demodulator 20, 22, einen ersten und einen zweiten Modulator 24, 26 und einen ersten und einen zweiten Kompensationspunkt 28, 30 und einen Additionspunkt 36. Ferner tragen zum Ermitteln der Drehrate N vorzugsweise ein Kalkulator 40, ein erster und ein zweiter Korrekturpunkt 32, 34 und ein Digital-Analog-Wandler DAC bei.

Abhängig von einem primären Startstellsignal E0_prim wird das Sensorelement 2 zu einer Primärschwingung angeregt und ein primäres Messsignal A_PRIM erfasst. Das primäre Startstellsignal E0_prim ist vorzugsweise eine Wechselspannung die an den primären Erregerelektroden 6 anliegt. Der Drehratensensor 1 ist so ausgelegt, dass das Sensorelement 2 beim Ermitteln der Drehrate N mit seiner Eigenfrequenz FE schwingt. Die Eigenfrequenz FE des Sensorelements 2 hängt jedoch linear von einer Temperatur T des Sensorelements 2 ab. Daher wird zunächst die Frequenz des primären Startsignals E0_PRIM innerhalb eines vorgegebenen Frequenzintervalls variiert, bis eine Amplitude AMP_A_PRIM des primären Messsignals A_PRIM einen vorgegebenen Startschwellwert erreicht, der repräsentativ ist für die Amplitude der Primärschwingung bei der Eigenfrequenz FE.

Der Phased Locked Loop PLL umfasst vorzugsweise einen spannungskontrollierten Oszillator. Die Kopplung des Phased Locked Loop PLL in dem primären Regelkreis trägt dazu bei, dass das Sensorelement 2 immer annährend mit seiner temperaturabhängigen Eigenfrequenz FE schwingt. Die Automatic Gain Control AGC trägt dazu bei, die Amplitude der Primärschwingung zu überwachen. Dazu wird die Amplitude AMP_A_PRIM des primären Messsignal A_PRIM auf einen Sollwert E1 geregelt. Der Sollwert E1 der Amplitude AMP_A_PRIM des primären Messsignals A_PRIM wird auf einem Prüfstand ermittelt und beim Betrieb des Drehratensensors 1 abhängig von der Temperatur T mit einer Steuervorrichtung 4 angepasst.

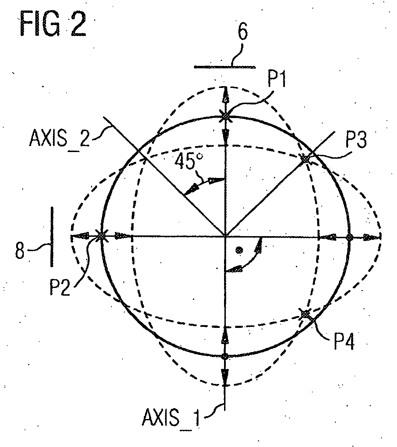

Die Primärschwingung des Sensorelements 2 entlang einer ersten Achse AXIS_1 (Figur 2) ruft aufgrund der Ringform des Sensorelements 2 eine entsprechende Schwingung entlang einer zur ersten Achse AXIS_1 korrespondierenden Achse hervor, die senkrecht auf der ersten Achse Axis_1 steht. Die Amplitude der Primärschwingung ist somit in erster Näherung an einem primären Erregerpunkt P1 und an einem primären Abnahmepunkt P2 maximal. Dies trägt dazu bei, dass von der primären Detektorelektrode 8 das primäre Messsignal A_PRIM sehr präzise erfasst werden kann. Eine zweite Achse AXIS_2 schließt mit der ersten Achse AXIS_1 einen Winkel von 45° ein. An einem sekundären Erregerpunkt P3 und an einem sekundären Abnahmepunkt P4, die auf der zweiten Achse AXIS_2 liegen, bilden sich Schwingungsknoten des Sensorelements 2 aus, an denen bei einem idealisierten Sensorelement 2 die Amplitude der Primärschwingung entlang der zweiten Achse AXIS_2 null ist.

Falls der Drehratensensor 1 mit der Drehrate N gedreht wird, so wird die Primärschwingung von einer Sekundärschwingung überlagert. Die Sekundärschwingung ruft eine Schwingung mit einer Amplitude entlang einer beliebigen Achse hervor, die einen Winkel ungleich null mit der ersten Achse AXIS_1 einschließt. Die Sekundärschwingung und auch die Schwingung entlang der beliebigen Achse sind repräsentativ für die Drehrate N.

Vorzugsweise wird die Sekundärschwingung entlang der zweiten Achse AXIS_2 an dem sekundären Abnahmepunkt P4 von den sekundären Detektorelektroden 12 erfasst. Die sekundären Detektorelektroden 12 detektieren ein sekundäres Messsignal A_SEC. Das sekundäre Messsignal A_SEC ist repräsentativ für die Sekundärschwingung und ist mit der Drehrate N moduliert. Bevorzugt wird das sekundäre Messsignal A_SEC von dem Analog-Digital-Wandler ADC in ein digitales sekundäres Messsignal DIG_A_SEC umgewandelt. Vorzugsweise ist dem Analog-Digital-Wandler ADC ein Inverter 14 nachgestellt, der das digitalisierte sekundäre Messsignal DIG_A_SEC invertiert. Das Invertieren bewirkt eine Rückkopplung des sekundären Messsignals A_SEC und trägt dazu bei, ein sekundäres Stellsignal E_SEC an den sekundären Erregerelektroden 10 hervorzurufen, das der Sekundärschwingung entgegenwirkt.

Nach dem Invertieren können ein Realteil RE_A_SEC und ein Imaginärteil IM_A_SEC des digitalisierten sekundären Messsignals DIG_A_SEC getrennt voneinander demoduliert werden. Der Realteil RE_A_SEC ist repräsentativ für eine Amplitude AMP_A_SEC des sekundären Messsignals A_SEC und damit auch repräsentativ für die Sekundärschwingung und die Drehrate N. Der Realteil RE_A_SEC wird von einem ersten Demodulator 20 so demoduliert, dass aus einem demodulierten Realteil DEM_RE des digitalen sekundären Messsignals A_SEC die Drehrate N ermittelt werden kann. Das Demodulieren erfolgt vorzugsweise abhängig von einem ersten Phasenwinkel E2, der auf dem Prüfstand bei einer Referenztemperatur REF_T ermittelt werden kann und der beim Betrieb des Drehratensensors 1 von der Steuervorrichtung 4 vorzugsweise abhängig von der Temperatur T angepasst werden kann. In einer ersten Filteranordnung 16 wird aus dem demodulierten Realteil DEM_RE des sekundären Messsignals A_SEC ein Drehratenwert erzeugt, durch den die Drehrate N ermittelt werden kann. Abhängig von dem Drehratenwert wird von dem Kalkulator 40 ein erster digitaler Wert RA_D1 der Drehrate N sowie ein zweiter digitaler Wert RA_D2 der Drehrate N ermittelt. Die beiden unterschiedlichen digitalen Werte RA_D1, RA_D2 tragen zu ihrer gegenseitigen Plausibilisierung bei. An dem ersten Korrekturpunkt 32 und dem zweiten Korrekturpunkt 34 kann ein systembedingter Fehler des ersten digitalen Wertes RA_D1 bzw. des zweiten digitalen Wertes RA_D2 abhängig von einem ersten bzw. einem zweiten Drehraten-Korrekturwert E6, E7 korrigiert werden. Der erste und der zweite Drehraten-Korrekturwert E6, E7 können vorzugsweise an dem Prüfstand bei einer Referenztemperatur REF_T ermittelt werden und beim Betrieb des Drehratensensors 1 abhängig von der Temperatur T angepasst werden. Aus den digitalen Werten RA_D1, RA_D2 wird nach der Korrektur die Drehrate N bzw. eine entsprechende Plausibilisierungs-Drehrate N_K ermittelt. Der demodulierte Realteil DEM_RE kann an der ersten Kompensationsvorrichtung 28 entsprechend einem ersten Stellgrößen-Korrekturwert E4 angepasst werden. Das Anpassen des demodulierten Realteils DEM_RE wirkt sich auf das sekundäre Stellsignal E_SEC aus und trägt dazu bei, der Sekundärschwingung entgegen zu wirken. Der erste Stellgrößen-Korrekturwert E4 kann vorzugsweise auf dem Prüfstand ermittelt werden und beim Betrieb des Drehratensensors 1 durch die Steuervorrichtung 4 abhängig von der Temperatur T angepasst werden. An dem ersten Modulator 24 kann der demodulierte Realteil DEM_RE moduliert werden abhängig von einem zweiten Phasenwinkel E3. Der zweite Phasenwinkel E3 kann vorzugsweise auf dem Prüfstand bei der Referenztemperatur T_REF ermittelt werden und beim Betrieb des Drehratensensors 1 durch die Steuervorrichtung 4 abhängig von der Temperatur T angepasst werden. Durch das Modulieren des demodulierten Realteils DEM_RE wird ein Realteil RE_E_SEC des sekundären Stellsignals E_SEC erzeugt.

Der Imaginärteil IM_A_SEC des sekundären Messsignal A_SEC ist repräsentativ für eine Phase und eine Frequenz des sekundären Messsignals A_SEC. Der Imaginärteil IM_A_SEC kann von einem zweiten Demodulator 22 demoduliert werden. Das Demodulieren erfolgt abhängig von dem ersten Phasenwinkel E2, da der Imaginärteil IM_A_SEC immer eine Phasenverschiebung von 90° bezüglich dem Realteil RE_A_SEC aufweist. Alternativ kann sich der erste Phasenwinkel E2 auch direkt auf den Imaginärteil IM_A_SEC auswirken und bei dem Demodulieren des Realteils RE_A_SEC wird dann die Phasenverschiebung von 90° bezüglich dem Imaginärteil IM_A_SEC berücksichtigt. Die zweite Filteranordnung 18 erzeugt abhängig von dem Imaginärteil IM_A_SEC einen Kontrollwert IM_KW. Der Kontrollwert IM_KW ist bei einem idealen Drehratensensor 1 und einer Drehrate N von Null genau Null. Ein realer Drehratensensor 1 weist jedoch einen Kontrollwert IM_KW ungleich null auf, der repräsentativ ist für einen Offset des Drehratensensors 1. Der Kontrollwert IM_KW kann daher dazu beitragen, den systembedingten Offset auszugleichen. Dazu wird an dem zweiten Kompensationspunkt 30 der Kontrollwert IM_KW abhängig von einem zweiten Stellgrößen-Korrekturwert E5 angepasst. Der zweite Stellgrößen-Korrekturwert E5 kann vorzugsweise auf dem Prüfstand bei der Referenztemperatur T_REF ermittelt werden und beim Betrieb des Drehratensensors 1 durch die Steuervorrichtung 4 abhängig von der Temperatur T angepasst werden. Der angepasste Kontrollwert IM_KW kann durch den zweiten Modulator 26 abhängig von dem zweiten Phasenwinkel E3 moduliert werden. Durch das Modulieren des angepassten Kontrollwerts IM_KW wird ein Imaginärteil IM_E_SEC des sekundären Stellsignals E_SEC erzeugt.

Der Realteil RE_E_SEC und der Imaginärteil IM_E_SEC des sekundären Stellsignals E_SEC werden an dem Additionspunkt 36 addiert und bilden somit das sekundäre Stellsignal E_SEC, das der Sekundärschwingung entgegenwirkt.

Die Werte EN können beispielsweise den Sollwert E1 der Amplitude des primären Messsignals A_PRIM und/oder den ersten und/oder den zweiten Phasenwinkel E2, E3 und/oder den ersten und/oder den zweiten Stellgrößen-Korrekturwert E4, E5 und/oder den ersten und/oder den zweiten Drehraten-Korrekturwert E6, E7 umfassen. Die Werte EN können durch die Steuervorrichtung 4 abhängig von der Temperatur T angepasst werden. Die Steuervorrichtung 4 kann die Werte EN auch abhängig von der Eigenfrequenz FE des Sensorelements 2 anpassen, da sich die Eigenfrequenz FE des Sensorelements 2 linear mit der Temperatur T ändert. Vorzugsweise kann die Eigenfrequenz FE abhängig von dem primären Messsignal A_PRIM ermittelt werden. Alternativ kann die Eigenfrequenz auch abhängig von dem sekundären Messsignal A_SEC ermittelt werden.

Ein erstes Programm zum Anpassen der Werte EN ist vorzugsweise in der Steuervorrichtung 4 abgespeichert. Vorzugsweise wird in einem Schritt S1 das erste Programm gestartet, sobald das Sensorelement 2 annährend mit seiner Eigenfrequenz FE schwingt.

In einem Schritt S2 wird die Eigenfrequenz FE des Sensorelements 2 erfasst.

In einem Schritt S3 wird einer der auf dem Prüfstand ermittelten Werte EN aufgerufen.

In einem Schritt S4 wird der Aufgerufene der Werte EN abhängig von der Eigenfrequenz FE angepasst vorzugsweise unter der in dem Schritt S4 angegebenen ersten Berechnungsvorschrift. In die Berechnung gehen ein erster und ein zweiter Proportionalitätsfaktor G, K ein. Die erste Berechnungsvorschrift ist eine Taylorentwicklung um die Eigenfrequenz FE, die nach dem zweiten Glied abbricht. Es kann aber auch eine geeignete andere mathematische Entwicklung und/oder eine erste Kennlinie zum Anpassen der Werte EN verwendet werden. Die erste Kennlinie kann beispielsweise auf dem Prüfstand ermittelt und in der Steuervorrichtung 4 gespeichert werden.

In einem Schritt S5 wird das erste Programm beendet. Das erste Programm wird vorzugsweise während des Betriebs des Drehratensensors 1 immer wieder in einer Schleife abgearbeitet.

Ferner kann in der Steuervorrichtung 4 ein zweites Programm zum Ermitteln der Temperatur abgespeichert sein. Das zweite Programm wird vorzugsweise nach Erreichen der Eigenfrequenz FE des Sensorelements 2 in einem Schritt S1 gestartet.

In einem Schritt S2 wird die Eigenfrequenz FE des Sensorelements 2 erfasst.

In einem Schritt S6 wird abhängig von der Eigenfrequenz FE die Temperatur T ermittelt, vorzugsweise unter der in dem Schritt S6 angegebenen Berechnungsvorschrift. Die zweite Berechnungsvorschrift ist eine Taylorentwicklung um die Eigenfrequenz FE, die nach dem zweiten Glied abbricht. Es kann aber auch eine geeignete andere mathematische Entwicklung und/oder eine zweite Kennlinie zum Ermitteln der Temperatur T verwendet werden. Die zweite Kennlinie kann beispielsweise auf dem Prüfstand ermittelt und in der Steuervorrichtung 4 gespeichert werden.

Die Erfindung ist nicht auf das angegebene Ausführungsbeispiel beschränkt. Beispielsweise kann bei einem beliebigen Drehratensensor ein beliebiger Wert, der sich auf die ermittelte Drehrate auswirkt, mittels des ersten Programms und/oder abhängig von dem Ergebnis des zweiten Programms angepasst werden. Ferner kann der Drehratensensor 1 weitere oder weniger Erregerelektroden und Detektorelektroden aufweisen. Dementsprechend können dann weitere bzw. weniger Werte angepasst werden, die sich auf die Stellgrößen auswirken. Die automatische Amplitudenkontrolle AGC, der Phased Looked Loop PLL, der Analog-Digital-Wandler ADC, der Inverter 14, der erste und/oder der zweite Demodulator 20, 22, der erste und/oder der zweite Modulator 24, 26 und/oder der erste und/oder der zweite Kompensationspunkt 28, 30, der Kalkulator 40 und/oder der erster und/oder der zweite Korrekturpunkt 32, 34 und/oder der Digital-Analog-Wandler DAC können sowohl als elektronische Bauelemente als auch als weitere Software-Programme ausgeführt sein, die vorzugsweise in der Steuervorrichtung 4 gespeichert sind und abgearbeitet werden. Ferner können weitere oder weniger elektronische Bauelemente angeordnet bzw. entsprechende Software-Programme abgespeichert sein.

## Patentansprüche

1. Verfahren zum Ermitteln einer Drehrate (N), bei dem
- abhängig von einem primären Stellsignal (E_PRIM) ein Sensorelement (2), dessen Eigenfrequenz (FE) linear von seiner Temperatur (T) abhängt, zu einer Primärschwingung entlang einer ersten Achse (AXIS_1) angeregt wird,
- ein primäres Messsignal (A_PRIM) erfasst wird, das repräsentativ ist für die Primärschwingung,
- ein sekundäres Messsignal (A_SEC) erfasst wird, das repräsentativ ist für eine Sekundärschwingung des Sensorelements (2) entlang einer zweiten Achse (AXIS_2), die mit der ersten Achse (AXIS_1) einen Winkel ungleich null einschließt,
- sobald das Sensorelement annähernd mit der Eigenfrequenz schwingt, die Eigenfrequenz (FE) des Sensorelements (2) ermittelt wird,
- ein auf einem Prüfstand ermittelter Sollwert (E1) der Amplitude (AMP_A-PRIM) des primären Messsignals (A_PRIM) aufgerufen wird,
der aufgerufene Sollwert (E1) abhängig von der ermittelten Eigenfrequenz (FE) des Sensorelements (2) angepasst wird,
- die Amplitude (AMP_A-PRlM) des primären Messsignals (A_PRIM) auf den Sollwert (E1) geregelt wird,
- abhängig von einer Amplitude und/oder einer Phase des sekundären Ausgangssignals (A_SEC) die Drehrate (N) ermittelt wird,
- lediglich abhängig von der ermittelten Eigenfrequenz (FE) mindestens ein Drehraten-Korrekturwert (E6, E7) angepasst wird, der sich auf die ermittelte Drehrate (N) auswirkt.

2. Verfahren nach Anspruch 1, bei dem der erste und/oder der zweite Drehraten-Korrekturwert (E6, E7) ermittelt wird mittels einer mathematischen Entwicklung des ersten und/oder des zweiten Drehraten-Korrekturwerts (E6, E7) um eine Referenzfrequenz (F_REF) des Sensorelements (2), die repräsentativ ist für die Eigenfrequenz (FE) des Sensorelements (2) bei einer Referenztemperatur (T_REF).

3. Vorrichtung zum Ermitteln einer Drehrate (N), die ausgebildet ist zum
- Anregen eines Sensorelements (2), dessen Eigenfrequenz (FE) linear von seiner Temperatur (T) abhängt, zu einer Primärschwingung entlang einer ersten Achse (AXIS_1) abhängig von einem primären Stellsignal (E_PRIM),
- Erfassen eines primären Messsignals (A_PRIM), das repräsentativ ist für die Primärschwingung,
- Erfassen eines sekundären Messsignals (A_SEC), das repräsentativ ist für eine Sekundärschwingung des Sensorelements (2) entlang einer zweiten Achse (AXIS_2), die mit der ersten Achse (AXIS_1) einen Winkel ungleich null
- sobald das Sensorelement annähernd mit der Eigenfrequenz schwingt, Ermitteln der Eigenfrequenz (FE) des Sensorelements (2),
- ein auf einem Prüfstand ermittelter Sollwert (E1) der Amplitude (AMP_A-PRIM) des primären Messsignals (A_PRIM) aufgerufen wird,
der aufgerufene Sollwert (E1) abhängig von der ermittelten Eigenfrequenz (FE) des Sensorelements (2) angepasst wird,
- die Amplitude (AMP_A-PRIM) des primären Messsignals (A_PRIM) auf den Sollwert (E1) geregelt wird,
- Ermitteln der Drehrate (N) abhängig von einer Amplitude und/oder einer Phase des sekundären Ausgangssignals (A_SEC),
- Anpassen lediglich abhängig von der ermittelten Eigenfrequenz (FE) mindestens eines Drehraten-Korrekturwerts (E6, E7), der sich auf die ermittelte Drehrate (N) auswirkt.

## Claims

1. Method for determining a rotation rate (N), in which
- a primary actuating signal (E_PRIM) energizes a sensor element (2), whose natural frequency (FE) is linearly dependent on its temperature (T), to carry out a primary oscillation along a first axis (AXIS_1),
- a primary measurement signal (A_PRIM) which is representative of the primary oscillation is recorded,
- a secondary measurement signal, (A_SEC) is recorded, which is representative of a secondary oscillation of the sensor element (2) along a second axis (AXIS_2) which includes an angle which is not equal to zero with the first axis (AXIS_1),
as soon as the sensor element oscillates approximately with the natural frequency, the natural frequency (FE) of the sensor element (2) is determined,
- a nominal value (E1) of the amplitude (AMP_A-PRIM) of the primary measurement signal (A_PRIM) is called up, said nominal value having been determined on a test rig,
the nominal value (E1) called up is adapted as a function of the determined natural frequency (FE) of the sensor element (2),
- the amplitude (AMP_A-PRIM) of the primary measurement signal (A_PRIM) is regulated to the nominal value (E1),
- the rotation rate (N) is determined as a function of the amplitude and/or the phase of the secondary output signal (A_SEC),
- at least one rotation rate correction value (E6, E7) which acts on the determined rotation rate (N) is adapted just as a function of the determined natural frequency (FE).

2. Method according to Claim 1, in which the first and/or the second rotation rate correction value (E6, E7) are/is determined by means of a mathematical development of the first and/or of the second rotation rate correction value (E6, E7) about a reference frequency (F_REF) of the sensor element (2), which reference frequency (F_REF) is representative of the natural frequency (FE) of the sensor element (2) at a reference temperature (T_REF).

3. Apparatus for determining a rotation rate (N), which is designed to
- energize a sensor element (2), whose natural frequency (FE) is linearly dependent on its temperature (T), to carry out a primary oscillation along a first axis (AXIS_1) as a function of a primary actuating signal (E_PRIM),
- record a primary measurement signal (A_PRIM) which is representative of the primary oscillation,
- record a secondary measurement signal (A_SEC), which is representative of a secondary oscillation of the sensor element (2) along a second axis (AXIS_2) which includes an angle which is not equal to zero with the first axis (AXIS_1),
- as soon as the sensor element oscillates approximately with the natural frequency, determine the natural frequency (FE) of the sensor element (2),
- a nominal value (E1) of the amplitude (AMP_A-PRIM) of the primary measurement signal (A_PRIM) is called up, said nominal value having been determined on a test rig,
the nominal value (E1) called up is adapted as a function of the determined natural frequency (FE) of the sensor element (2),
- the amplitude (AMP_A-PRIM) of the primary measurement signal (A_PRIM) is regulated to the nominal value (E1),
- determine the rotation rate (N) as a function of the amplitude and/or the phase of the secondary output signal (A_SEC);
- adapt at least one rotation rate correction value (E6, E7), which acts on the determined rotation rate (N), just as a function of the determined natural frequency (FE).

## Revendications

1. Procédé permettant de détecter une vitesse de rotation (N), dans lequel
- en fonction d'un signal primaire de commande (E_PRIM), un organe capteur (2), dont la fréquence propre (FE) dépend d'une façon linéaire de sa température (T), est excité et produit une oscillation primaire le long d'un premier axe (AXE_1),
- un signal primaire de mesure (A_PRIM), qui est représentatif pour l'oscillation primaire, est détecté,
- un signal secondaire de mesure (A_SEC), qui est représentatif pour une oscillation secondaire de l'organe capteur (2) le long d'un deuxième axe (AXE_2), lequel deuxième axe forme un angle non nul avec le premier axe (AXE_1), est détecté,
- la fréquence propre (FE) de l'organe capteur (2) est détectée dès que l'organe capteur oscille approximativement à la fréquence propre,
- une valeur de consigne (E1) de l'amplitude (AMP_A-PRIM) du signal primaire de mesure (A_PRIM), détectée sur un banc d'essai, est affichée,
la valeur de consigne (E1) est adaptée en fonction de la fréquence propre (FE) détectée de l'organe capteur (2),
- l'amplitude (AMP_A-PRIM) du signal primaire de mesure (A_PRIM) est ajustée à la valeur de consigne (E1),
- la vitesse de rotation (N) est détectée en fonction d'une amplitude et / ou d'une phase du signal secondaire de sortie (A_SEC),
- au moins un facteur de correction (E6, E7) des vitesses de rotation, qui est appliqué à la vitesse de rotation (N) détectée, est adapté uniquement en fonction de la fréquence propre (FE) détectée.

2. Procédé selon la revendication 1, dans lequel le premier et /ou le deuxième facteur de correction (E6, E7) des vitesses de rotation est déterminé au moyen d'un développement mathématique du premier et/ou du deuxième facteur de correction (E6, E7) des vitesses de rotation autour d'une fréquence de référence (F_REF) de l'organe capteur (2), qui est représentative pour la fréquence propre (FE) de l'organe capteur (2) à une température de référence (T_REF).

3. Dispositif permettant de détecter une vitesse de rotation (N), conçu pour
- exciter un organe capteur (2), dont la fréquence propre (FE) dépend d'une façon linéaire de sa température (T), et produit une oscillation primaire le long d'un premier axe (AXE_1) en fonction d'un signal primaire de commande (E_PRIM),
- détecter un signal primaire de mesure (A_PRIM), qui est représentatif pour l'oscillation primaire,
- détecter un signal secondaire de mesure (A_SEC), qui est représentatif pour une oscillation secondaire de l'organe capteur (2) le long d'un deuxième axe (AXE_2), lequel deuxième axe forme un angle non nul avec le premier axe (AXE_1),
- déterminer la fréquence propre (FE) de l'organe capteur (2) est détectée dès que l'organe capteur oscille approximativement à la fréquence propre,
- une valeur de consigne (E1) de l'amplitude (AMP_A-PRIM) du signal primaire de mesure (A_PRIM), détectée sur un banc d'essai, est affichée,
la valeur de consigne (E1) est adaptée en fonction de la fréquence propre (FE) détectée de l'organe capteur (2),
- l'amplitude (AMP_A-PRIM) du signal primaire de mesure (A_PRIM) est ajustée à la valeur de consigne (E1),
- déterminer la vitesse de rotation (N) en fonction d'une amplitude et / ou d'une phase du signal secondaire de sortie (A_SEC),
- adapter au moins un facteur de correction (E6, E7) des vitesses de rotation, qui est appliqué à la vitesse de rotation (N) détectée, uniquement en fonction de la fréquence propre (FE) détectée.
